# EUROPEAN PATENT SPECIFICATION

(11) **EP 1 168 865 B1**
(45) Date of publication and mention of the grant of the patent: **06.05.2004**
(21) Application number: 00915092.1
(22) Date of filing: 15.03.2000
(51) Int. Cl.: H04S 3/00

(54) **WCDMA MOBILE DEVICE FOR TRANSMITTING MULTICHANNEL SOUNDS**
MOBILES WCDMA-GERÄT ZUR ÜBERMITTLUNG VON MEHRKANALTÖNEN
DISPOSITIF MOBILE AMRC (ACCES MULTIPLE PAR CODE DE REPARTITION) POUR TRANSMISSION DE SONS MULTICANAUX

(30) Priority: 15.03.1999 CN 99102896
(43) Date of publication of application: 02.01.2002
(73) Proprietor: Huawei Technologies Co., Ltd., Nanshan District, Shenzhen 518057 (CN)
(72) Inventor: LI, Yingtao, Haidian District, Beijing 100085 (CN)
(74) Representative: Sherrard-Smith, Hugh
(86) International application number: PCT/CN2000/000051
(87) International publication number: WO 2000/056093

(56) References cited:
- CN-A- 1 113 369
- US-A- 5 781 542
- US-A- 5 799 005
- RICHARD SIETMANN: "Ringen um die UMTS-Schnittstelle" FUNKSCHAU, vol. 6, 6 March 1998 (1998-03-06), pages 76-81, XP002240002
- RICHARD SIETMANN: "Das Mobilfunknetz der Zukunft" FUNKSCHAU, vol. 4, 31 January 1997 (1997-01-31), pages 68-71, XP002240001
- GOLDING D ET AL: "MOBILE MULTIMEDIA APPLICATIONS" BRITISH TELECOMMUNICATIONS ENGINEERING, BRITISH TELECOMMUNICATIONS ENGINEERING. LONDON, GB, vol. 17, no. 1, 1 April 1998 (1998-04-01), pages 18-24, XP000765545 ISSN: 0262-401X

## Description

### Field of the Technology

The present invention relates generally to mobile communication, and more particularly to a wideband code division multiple access (CDMA) mobile equipment capable of transmitting bi-directional real-time multichannel sound.

### Background of the Invention

Sound can usually be divided into single-channel or multi-channel sound, and further into narrowband or wideband sound by virtue of sound bandwidth. Common amplitude modulation (AM) broadcasting and wire-telephone fall into single-channel sound with bandwidth less than 4KHz and poorer sound quality; frequency modulation (FM) stereo broadcasting pertains to multichannel sound with bandwidth about 15KHz and better sound quality.

Generally speaking, broadcasting and television are also part of mobile communication system when they are in a mobile status. FM broadcasting system and mobile station can only, however, receive stereo or multichannel music and voice. They can not carry out bi-directional voice or character information transmission, therefore they are not the mobile communication system in common sense. On the other hand, although such the mobile communication systems mainly for exchanging information, as cellular mobile telephone, radio pager and satellite mobile communication etc. can provide bi-directional voice and character information exchange or transmission, they cannot provide music or multichannel sound service of high quality.

The mobile communication system has evolved from the first generation (1G) of mobile analog cellular system to the second generation (2G) of mobile digital cellular system. Based on the core technologies of analog modulation and frequency division multiple access (FDMA), the 1G mobile communication system used to transmit analog voice. While, based on the core technologies of digital transmission and time division multiple access (TDMA), the 2G mobile communication system is capable of transmitting encoded digital voice. Whether 1G or 2G system is, however, restricted by the transmission technology and capacity of subscriber. In order to transmit more voice within the restricted bandwidth the quality of analog or digital voice had to be degraded, so that neither of them could transmit high quality of sound, to say nothing of the transmission of multichannel music and voice. As far as the present applicant knows, there has not been so far any bi-directional communication equipment that can provide multichannel sound simultaneously in a mobile device.

### Summary of the Invention

CDMA digital cellular mobile communications system can, with large system capacity only restricted by interference, other than the bandwidth-restricted capacity of FDMA and TDMA, better realize the broadband data transmission. It can be the basis of providing bi-directional, high purity and high quality of multichannel sound service on the digital mobile communication system.

The present invention provides a wideband CDMA mobile equipment capable of transmitting multichannel sound, so that the existing mobile communication system can, at the same time of information exchange, transmit high quality of sound. The user can not only obtain the demanded information, but also enjoy the music and voice service of high purity and quality from the mobile communication system.

The present invention further actualizes real-time bi-directional multichannel sound and image communication in combination of image encoding.

The wideband CDMA mobile equipment capable of transmitting multichannel sound according to the present invention, comprises sending unit, receiving unit, central processing unit (CPU) connecting with the said sending and receiving unit, duplexer connecting with the said sending and receiving unit, and antenna connecting with the said duplexer; wherein:

The said sending unit includes at least pickup sets, sound signal pre-processing sets, sound signal encoder, channel encoder, wideband CDMA modulator and radiofrequency (RF) sender; they are linked in a sequence; the output of the RF sender, connecting with the input of the duplexer, sends out to the antenna;

The said receiving unit includes at least RF receiver, wideband CDMA demodulator, channel decoder, sound signal decoder, sound signal post-processors and reproducer; they are linked in a sequence; the signal from antenna will be sent to the RF receiver via the duplexer;

The above pickup sets are composed of more than one pickup; the said sound signal pre-processing sets are composed of more than one sound signal pre-processor, with each sound signal pre-processor corresponding to one pickup; the said sound signal post-processing sets are composed of more than one sound signal post-processor.

According to the above technical scheme, the said sending unit includes further pick-up head, image signal pre-processing unit and image signal encoder. They are linked in a sequence. The output of the image signal encoder is connected with input of the said channel encoder. The said receiving unit includes further image signal decoder, image signal post-processing unit and monitor. They are also linked in a sequence. The input of the image decoder is connected with the output of the channel decoder.

There are two or more than two of the said pickup that may be general or Hi-Fi pickup, or linked to sound source device by the line-in interface of multichannel sound.

The said sound reproducer is speaker sets or multichannel earphones, or can be linked out to other playing device by the line-out interface of multichannel sound.

The said sound signal encoder may be the sound signal encoder MP3 based on MPEG standard or the digital encoder in a CD player, or even AC-3 algorithm.

The said wideband CDMA modulator is a modulator with BPSK or QPSK spread spectrum mode keeping in line with the spread spectrum mode of the RF sender.

The said wideband CDMA demodulator is a demodulator with correlation operation as de-spreading spectrum mode and enhancing signal by RAKE receiver mode.

The said duplexer has two modes, i.e. frequency division duplex (FDD) and time division duplex (TDD). In the case of TDD mode, the said duplexer is connected with the CPU controlling the on-off of receiving and sending.

The said CPU includes central processor and attaching circuits containing man-machine interface circuit. The attaching circuits include at least large-scale memory unit capable of storing the received multichannel sound data.

The mobile equipment, according to the present invention, can access the system as terminal equipment of the mobile communication system in forms of portable machine, handset or vehicle machine.

In the sending unit of the mobile equipment, according to the present invention, the pickup sets or multichannel input device can produce electrical signal of multichannel sound. Signals from each sound source are multichannel-preprocessed respectively, including A/D transformation, via each channel, and then sent to the multichannel sound signal encoder. The signal encoder outputs digital code stream continuously or by frame, which will be sent to the channel encoder to increase capability of anti-interference. The data output from the channel encoder will then be emitted after being modulated by wideband CDMA modulator to the specified radio communication band. In the receiving unit, the received radio signals are demodulated with wideband CDMA to restore the data stream containing sound signal. The data stream is, through the channel decoder and the sound signal decoder, sent to the sound signal post-processor, and then high quality of sound will be restored by speaker or multichannel earphone.

On account of the wideband CDMA digital transmission technology adopted in the mobile equipment of the present invention, under the precondition of ensuring transmission quality of bi-directional voice and character as well as capacity of subscribers, sufficient transmission bandwidth can be provided to support the bandwidth requirement of transmitting bi-channel music or voice. The mobile equipment of the present invention utilizes the high quality of voice encoding technology to support as FM and CD music or voice services. The mobile equipment of the present invention further utilizes multichannel earphone or speaker to restore multichannel sound. It also has optional multichannel output interfaces.

Owing to the multichannel source encoding and wideband CDMA transmission technology adopted in the present invention, it can provide high quality of multichannel e.g. stereo voice or music, and enjoyable sound service on the mobile equipment of the mobile communication system. In combination with the image encoding technology, a real-time bi-directional multichannel sound and image communication can be realized at the same time.

### The Drawings

FIG 1 is a principle block diagram showing the structural of the wideband CDMA mobile equipment capable of transmitting multichannel sound.
FIG. 2 is a principle block diagram showing the applicable of the mobile equipment of the present invention in the mobile communication system.

### Detailed Description of the Invention

The invention will be described in detail with reference to the embodiments and the attached drawings.

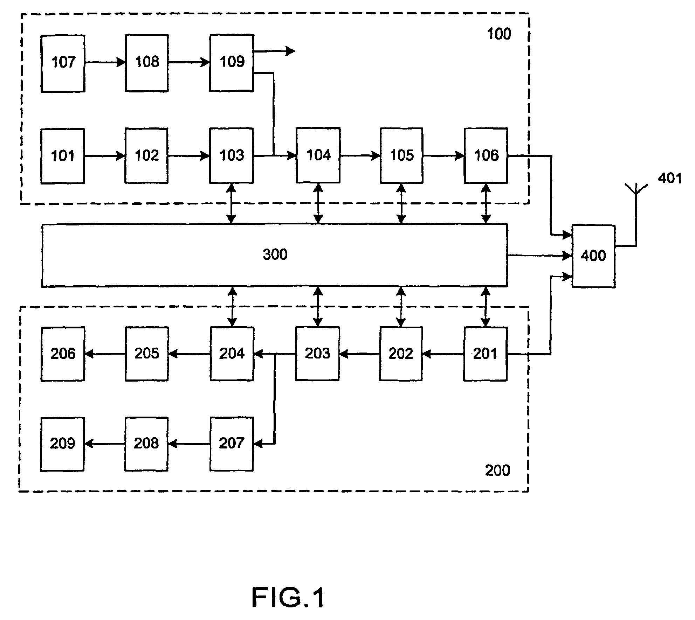

Reference to Figure 1, the wideband CDMA mobile equipment capable of transmitting multichannel sound, according to the present invention, includes the sending unit 100, the receiving unit 200, the central processing unit (CPU) 300, the duplexer 400 and the emission antenna 401. The duplexer 400 connects with the emission antenna 401.

CPU 300 includes central processor and attaching circuits containing man-machine interface, used for controlling the whole device.

The sending unit 100 at least includes the pickup sets 101, the sound signal pre-processor sets 102, the sound signal encoder 103, the channel encoder 104, the wideband CDMA modulator 105 and the radio frequency (RF) sender 106. It can further include the video pick-up head 107, the image pre-processor 108 and the image signal encoder 109.

The receiving unit 200 at least includes the RF receiver 201, the wideband CDMA demodulator 202, the channel decoder 203, the sound signal decoder 204, the sound signal post-processor sets 205 and the sound reproducer 206. It can further include the image signal decoder 207, the image signal post-processor 208 and the monitor 209.

In the sending unit 100, there are two or more than two pickups in the pickup sets 101, which may be general or Hi-Fi pickup. Sound will be transformed into a group of analog electrical signals by the pickup sets 101. The analog sound-electrical signals are, through the sound signal pre-processor sets 102, modulated to a suitable scope of amplitude and frequency, and then sent to the sound signal encoder 103. Taking FM dual channel sound as an example, the sound signal pre-processor sets 102 wipes off the signals of frequency beyond 15KHz and regulates the signal amplitude to a quantifiable extent which is acceptable by the sound signal encoder 103, e.g., 1Vp-p value corresponding with 16 bit linear quantified value. The output from the sound signal encoder 103 is the encoded bit, the digital signal. The sound signal encoder 103 may be the sound signal encoder under the standard of MPEG or the digital encoder in CD player; or even the AC-3 algorithm produced by Dolby. The sound signal encoder 103 can output digital signals continuously or by frame, just like the common G729 encoding. The channel encoder 104 is used to increase information redundancy and capability of error correcting. Error correcting coding can adopt Convolutional coding or Turbo coding suitable for high code rate. When the sound signal encoder 103 uses frame-output mode, interlace can be added properly in the channel encoder 104 to further enhance the capability of anti-interference. The frame duration may be 5 or 10 ms; interlace duration may be 50 or 30 ms. The data encoded by the channel encoder is sent to the wideband CDMA modulator 105 to complete spread spectrum. The way of spreading spectrum may be either BPSK or QPSK, so long as it keeps in line with the design of the RF sender 106 and meets the requirement of spectrum. Signals are, after spread spectrum, sent to the RF sender 106, in which they are modulated to the carrier suitable to emit. And then they are sent to the duplexer 400, after amplified properly, to emit to the antenna 401. The RF sender 106 includes local oscillator to produce appropriate RF carrier. The modulation of RF carrier may adopt the way of direct or mixing modulation. There are many ways of modulation for option, such as QPSK or QQPSK. Besides, the RF sender 106 should include filter for restricting bandwidth and power amplifier for amplifying signals. And the structural design of the RF sender 106 should keep in line with the RF receiver 201.

The functions of the pick-up head 107, the image signal pre-processor 108 and the image signal encoder 109 are the same as those of the pickup sets 101, the sound signal pre-processing sets 102 and the sound signal encoder 103 respectively, but only the object of signal processing is image. The compressing coding of image signals may be MPEG image encoding.

When the receiving unit 200 receives signals, the signals from antenna are sent to the RF receiver 201 via the duplexer 400. The RF receiver 201 includes filter, low noise amplifier, transducer or demodulator with the same structural design as that of the RF sender 106. The signals passing through the RF receiver 201 are transformed into the form suitable for the wideband CDMA demodulator 202. The signals are despreaded spectrum in the wideband CDMA demodulator 202. The usual way of de-spreading spectrum is correlation operation and RAKE receiver is used to enhance the signals. The decision will be made first, after demodulation, and then sent to the channel decoder 203. The decision can be made by hard or soft. However, soft decision, in which the decision procedure is completed in the channel decoder 203, is more advantageous to the enhancement of the performance of the channel decoder. The data error-corrected by the channel decoder 203 are sent to the sound signal decoder 204, in which the digital signals are restored to the original analog multichannel sound. Only after such multichannel analog sound is processed by the sound signal post-processor sets 205, it can be sent to the sound reproducer 206, such as speaker or multichannel earphone. The sound signal post-processor sets 205 modulate the amplitude of the analog sound and process with perception weighting. It is obvious that there are a lot of ways to actualize the sound signal post-processor sets 205. The sound reproducer 206 is an element for restoring multichannel sound, wherein the multichannel earphone mode means setting up multichannel output jack on the equipment and connecting with the earphone to listen to the multichannel sound. Moreover, active speaker sets can be also connected with the multichannel jack as output device.

The functions of the image signal decoder 207, the image signal post-processor 208 and the monitor 209 are the same as those of the sound signal decoder 204, the sound signal post-processor sets 205 and the sound reproducer 206 respectively, only the processed object is the image. In addition, the image signals decoding is the compressed image decoding, e.g. MPEG decoding.

The central processing unit (CPU) and the attaching circuits containing man-machine interface 300 are used to process the control protocol of the whole mobile equipment and to provide I/O devices, such as keyboard and monitor, in which the attaching circuits also contain large scale memory unit. The central processing unit controls playing the stereo music decoded from the received multichannel sound data in real-time, or storing the data in the large-scale memory unit and playing later at the request of user's. In a word, the present equipment has the functions of real-time playing or storing first and playing later under the control of the central processing unit.

The central processing unit can, on the options of user's, control the present equipment working in different transmission modes. The first mode is for common voice transmission; the second is only for music; the third is for both common voice and music. It needn't to say much about the first and the second transmission mode. As for the third mode, voice and music can enter into pickup sets as mixture and will be transmitted with multichannel mode. Besides, voice and music can also enter into pickup sets respectively, then enter into different pickups respectively. In this case, voice can be transmitted with mono channel, while music with multichannel.

The wideband CDMA has capability of multi code channel transmission and time division transmission. Therefore, common voice and music can be transmitted after separate coding, when transmitted respectively. That is, after processed by one of the sound encoder, the common voice is encoded separately under the control of the central processing unit, and then sent to the wideband CDMA modulator, in which it is modulated to a single CDMA code channel. Music is, after encoded, sent to the wideband CDMA modulator, in which it is modulated to another CDMA code channel. A reverse procedure will be run in receiving terminal. The resulted sounds can be played separately on different channels or played after mixing.

Under the precondition without prejudice to the spirit of the present invention, many combination ways, base on different sound source, different mixing ways, different transmission modes and different playing modes, will fall into the scope of the present invention.

The duplexer 400 is a necessary element for realizing duplex communication. When used to isolate sending and receiving signals, we can choose the frequency gap of 75MHz or 90MHz on the 2000MHz frequency range to effectively separate sending and receiving signals. The duplexer 400 has reliable separation so that it could ensure not only sending and receiving signals in a separate status, but also no saturation in the receiving terminal owing to too strong emission signals.

The most common mode of duplex is frequency division duplex (FDD) and time division duplex (TDD), in which TDD mode is widely used in the current wireless access network. On account of the same sending and receiving frequency of the TDD mode, characteristic and performance of forward and reverse channel can basically keep in line. TDD mode is also in favor of optimizing system performance and simplifying terminal equipment with its channel's high correlation. According to the present invention, the technologies such as choice of emission antenna, pre-RAKE merging diversity, and self-adaptive antenna, etc. can be used in base station.

Although FDD duplex mode is taken as example in the above description of the present invention, the present invention is not limited to the FDD duplex mode. To the contrary, TDD duplex mode may be more suitable for it under certain circumstances. However, in TDD mode, the duplexer 400 is connected with the central processing unit to control the on-off of sending and receiving and achieve duplex, while in FDD mode, such connection is not needed.

Although the present invention is designed for mobile communication system, it is apparent that the ideas of the present invention can be also used in a fixing radio access system, even the better performance can be obtained if TDD mode is used in certain fixing radio access system.

The advantage of digital communication lies in the effective separation of source coding and modulation mode. Therefore, the sound coding, wideband CDMA modulation and demodulation, transmission mode and so on referred in the present invention, may develop separately. More effective source coding, modulation and multiple access modes can be tried to find out suitable modulation and multiple access modes, so long as the transmission code rate needed by the source coding and the capacity requirement of the system can be ensured. The wideband CDMA technology can offer such multiple access modes, such system capacity and such transmission code rate. By referring to the WCDMA proposal and its trial system of the IMT 2000 standard resolution, the elements for wideband CDMA modulation and source coding can be designed, and also the self-designed wideband CDMA modulator similar to the demodulation architecture of IS95 mobile station. As well as the discontinuous pilot frequency technology can be adopted. Under the condition of ensuring certain transmission rate and error code rate, CDMA 2000 or other system can be used in the present invention to realize the wideband CDMA mobile equipment capable of transmitting multichannel sound.

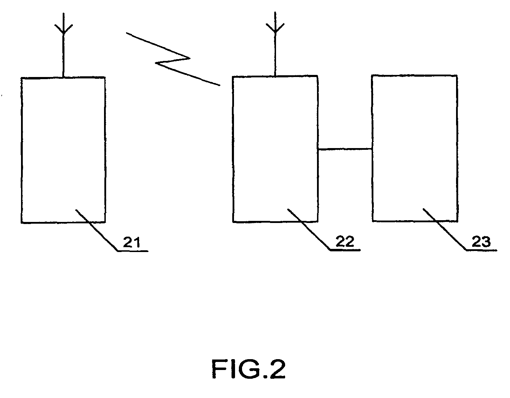

Referring to FIG 2, it shows the applicable status of the present invention, in which 21 is multichannel wideband CDMA mobile equipment; 22 is wideband CDMA base station; 23 is network system.

The network system refers to the mobile net providing wireless access, switching and various services. Apparently, the access function provided by the mobile net enables mobile subscribers to access other networks through the mobile net and obtain various kinds of services.

The exchange or the service-providing unit of the mobile net can store various multichannel sounds needed by users, e.g. a great amount of MP3 music data. On request of users, the exchange or the service-providing unit of the mobile net sends the suitable data to the wideband CDMA base station, by which the multichannel data, e.g. MP3 music data, is transmitted to the multichannel mobile equipment through the radio interface of the wideband CDMA. Then subscribers can enjoy the MP3 music in real-time mode by choice. Subscribers can also choose save mode to store the needed MP3 music in the large-scale memory unit, and then load and play it when needed. This is called load and play mode.

By the Internet access service provided by the mobile net, users can access to Internet. There are many music websites on the Internet, which provide the download service of MP3 music titles. The present equipment can be used to download these music titles through the mobile net and listen to in real-time or save and play later.

The multichannel mobile equipment of the present invention can be used as a MP3 portable player with downloading capability.

Two subscribers of the multichannel mobile equipment can transmit the multichannel sound to each other through the wideband CDMA base station and the mobile net. For instance, user A on a live concert can send the music to the mobile net by using the multichannel wideband CDMA mobile equipment through the wideband CDMA base station, and connect with user B's multichannel wideband CDMA mobile equipment by means of the exchange function of the mobile net, so that user B can listen to the music from the place where user A stands. At the same time, user B can also play the music by himself to user A through the pickup sets, or send the output of a stereo recorder to user A by link the output of the stereo recorder and the line-in interface of multichannel sound. Apparently, both users can enjoy the music by themselves or from the opposite at the same time. This is unheard of and wonderful, which comes only from the present invention.

In combination of image coding, user A can rebroadcast the concert where he locates to user B through the present equipment, and vice versa.

The present invention makes bi-directional real-time multichannel sound and image communication possible. Moreover, owing to the combination of many transmission modes, user A and user B can dial at the same time of listening to the music, here the telephone call is general voice, the music is multichannel sound, both can be independent respectively. Both kinds of sounds can be mixed either in the sending terminal or in the receiving terminal, so that the music could be played over the talk, just like background music.

The mobile equipment of the present invention can be hand-portable or vehicle-loaded or other type of mobile equipment. The mobile equipment can access to the system as terminal equipment of the mobile communication system and transmit multichannel music or voice, in which the mobile communication system can be, without limitation to, the third generation mobile communication system (IMT2000).

Although the embodiments of the present invention are described, it is apparent that various modifications and changes can be made within the spirit and scope of the present invention.

## Claims

1. A wideband CDMA mobile equipment capable of transmitting multichannel sound comprising sending unit (100), receiving unit (200), central processing unit (CPU, 300), duplexer (400) and antenna (401); the central processing unit (300) and the duplexer (400) are connected with the sending unit (100) and the receiving unit (200) respectively, the duplexer (400) is connected with the antenna (401), wherein:
the said sending unit (100) includes at least pickup sets (101), sound signal pre-processing sets (102), sound signal encoder (103), channel encoder (104), wideband CDMA modulator (105) and radiofrequency (RF) sender (106), they are linked in a sequence, the output of the RF sender (106), connected with the input of the duplexer (400), sends out to the antenna (401);
the said receiving unit (200) includes at least RF receiver (201), wideband CDMA demodulator (202), channel decoder (203), sound signal decoder (204), sound signal post-processing sets (205) and sound reproducer (206), they are linked in a sequence, the signal received by the antenna (401) is sendable to the RF receiver (201) via the duplexer (400);
the said pickup sets (101) are composed of more than one pickup, the said sound signal pre-processing sets (102) are composed of more than one sound signal pre-processor, with each sound signal pre-processor corresponding to one pickup; the said sound signal post-processing sets (205) are composed of more than one sound signal post-processor.

2. The wideband CDMA mobile equipment capable of transmitting multichannel sound according to claim 1, wherein:
the said sending unit (100) includes further pick-up head (107), image signal pre-processing unit (108) and image signal encoder (109), they are linked in a sequence, and the output of the image signal encoder (109) is connected with the input of the said channel encoder (104);
the said receiving unit includes further image signal decoder (207) image signal post-processing unit (208) and monitor (209), they are linked in a sequence, and the input of the image decoder (207) is connected with the output of the channel decoder (203).

3. The wideband CDMA mobile equipment capable of transmitting multichannel sound according to claim 1, wherein:
there are two or more than two of the said pickup (101) that may be general or Hi-Fi pickup.

4. The wideband CDMA mobile equipment capable of transmitting multichannel sound according to claim 1 or 3, wherein:
the said pickup (101) is the line-in interface of multichannel sound.

5. The wideband CDMA mobile equipment capable of transmitting multichannel sound according to claim 1, wherein:
the said sound reproduce (206) is speaker sets, with each speaker corresponding to a sound signal post-processor (205).

6. The wideband CDMA mobile equipment capable of transmitting multichannel sound according to claim 1, wherein:
the said sound reproducer (206) is the line-out interface of multichannel sound.

7. The wideband CDMA mobile equipment capable of transmitting multichannel sound according to claim 1, wherein:
the said sound reproducer (206) is multichannel earphone linked to a multichannel earphone output jack.

8. The wideband CDMA mobile equipment capable of transmitting multichannel sound according to claim 1, wherein:
the said sound signal encoder (103) is the sound signal encoder MP3 based on MPEG standard or the digital encoder in a CD player, or AC-3 algorithm.

9. The wideband CDMA mobile equipment capable of transmitting multichannel sound according to claim 1, wherein:
the said wideband CDMA modulator (105) is a modulator with BPSK or QPSK spread spectrum mode keeping in line with the spread spectrum mode of the RF sender.

10. The wideband CDMA mobile equipment capable of transmitting multichannel sound according to claim 1, wherein:
the said wideband CDMA demodulator (202) is a demodulator with correlation operation as de-spreading spectrum mode and enhancing signal by RAKE receiver mode.

11. The wideband CDMA mobile equipment capable of transmitting multichannel sound according to claim 1, wherein:
the said duplexer (400) is frequency division duplex (FDD).

12. The wideband CDMA mobile equipment capable of transmitting multichannel sound according to claim 1, wherein:
the said duplexer (400) is time division duplex (TDD), and the said duplexer is connected with the CPU (300) adapted to control the on-off of receiving and sending.

13. The wideband CDMA mobile equipment capable of transmitting multichannel sound according to claim 1, wherein:
the said CPU (300) includes central processor and attaching circuits containing man-machine interface, in which the attaching circuits includes at least large scale memory unit capable of storing the received multichannel sound data.

14. The wideband CDMA mobile equipment capable of transmitting multichannel sound according to claim 1 or 2, wherein:
it is adapted such that it can access to the system as terminal equipment of the mobile communication system.

15. The wideband CDMA mobile equipment capable of transmitting multichannel sound according to claim 1 or 2, wherein:
it is adapted such that it can be terminal mobile equipment in forms of portable machine, handset or vehicle machine.

## Patentansprüche

1. Breitband-CDMA-Mobilausrüstung, geeignet für die Übertragung von Mehrkanalton, umfassend eine Sendeeinheit 100, eine Empfangseinheit 200, eine zentrale Prozessoreinheit (CPU, 300), einen Duplexer 400 und eine Antenne 401; wobei die zentrale Prozessoreinheit 300 und der Duplexer 400 jeweils mit der Sendeeinheit 100 und der Empfangseinheit 200 verbunden sind und der Duplexer 400 mit der Antenne 401 verbunden ist, wobei gilt:
- die Sendeeinheit beinhaltet zumindest Aufnahmegeräte 101, Tonsignal-Vorverarbeitungsgeräte 102, einen Tonsignalkodierer 103, einen Kanalkodierer 104, einen Breitband-CDMA-Modulator 105 und einen Radiofrequenz-(RF)-Sender 106, welche sequentiell miteinander verbunden sind, wobei der Ausgang des RF-Senders 106, der mit dem Eingang des Duplexer 400 verbunden ist, an die Antenne 401 aussendet;
- die Empfangseinheit 200 beinhaltet zumindest einen RF-Empfänger 201, einen Breitband-CDMA-Demodulator 202, einen Kanaldekodierer 203, einen Tonsignaldekodierer 204, Tonsignal-Nachverarbeitungsgeräte 205 und ein Tonwiedergabegerät 206, welche sequentiell miteinander verbunden sind, wobei das von der Antenne 401 empfangene Signal sendbar an den RF-Empfänger 201 über den Duplexer 400 ist;
- die Aufnahmegeräte 101 sind zusammengestellt aus mehr als einer Aufnahme, die Tonsignal-Vorverarbeitungsgeräte 102 sind zusammengestellt aus mehr als einem Tonsignal-Vorverarbeiter, wobei jeder Tonsignal-Vorverarbeiter mit einem Aufnehmer korrespondiert; die Tonsignal-Nachverarbeitungsgeräte 205 sind zusammengestellt aus mehr als einem Tonsignal-Nachverarbeiter.

2. Breitband-CDMA-Mobilausrüstung, geeignet für das Übertragen von Mehrkanalton nach Anspruch 1, bei welcher gilt:
- die Sendeeinheit 100 beinhaltet ferner einen Aufnahmekopf 107, eine Bildsignal-Vorverarbeitungseinheit 108 und einen Bildsignalkodierer 109, welche sequentiell miteinander verbunden sind und wobei der Ausgang des Bildsignalkodierers 109 mit dem Eingang des Kanalkodierers 104 verbunden ist;
- die Empfangseinheit beinhaltet ferner einen Bildsignaldekodierer 207, eine Bildsignal-Nachverarbeitungseinheit 208 und einen Monitor 209, welche sequentiell miteinander verbunden sind und wobei der Eingang des Bilddekodierers 207 ist mit dem Ausgang des Kanaldekodierers 203 verbunden.

3. Breitband-CDMA-Mobilausrüstung, geeignet für das Übertragen von Mehrkanalton, nach Anspruch 1, bei welcher gilt:
- es gibt zwei oder mehr als zwei Aufnehmer 101, bei denen es sich um allgemeine oder Hi-Fi Aufnehmer handeln kann.

4. Breitband-CDMA-Mobilausrüstung, geeignet für das Übertragen von Mehrkanalton nach Anspruch 1 oder 3, bei welcher gilt:
- der Aufnehmer 101 ist das Line-in Interface des Mehrkanaltons.

5. Breitband-CDMA-Mobilausrüstung, geeignet für das Übertragen von Mehrkanalton nach Anspruch 1, bei welcher gilt:
- der Tonreproduzierer 206 ist ein Lautsprecherset, wobei jeder Lautsprecher einem Tonsignal-Nachverarbeiter 205 entspricht.

6. Breitband-CDMA-Mobilausrüstung, geeignet für das Übertragen von Mehrkanalton nach Anspruch 1, bei welcher gilt:
- der Tonreproduzierer 206 ist das Line-out Interface des Mehrkanaltons.

7. Breitband-CDMA-Mobilausrüstung, geeignet für das Übertragen von Mehrkanalton nach Anspruch 1, bei welcher gilt:
- der Tonreproduzierer 206 ist ein Mehrkanalohrhörer, verbunden mit einer Mehrkanalohrhörer-Ausgangsbuchse.

8. Breitband-CDMA-Mobilausrüstung, geeignet für das Übertragen von Mehrkanalton nach Anspruch 1, bei welcher gilt:
- der Tonsignalkodierer 103 ist der Tonsignalkodierer MP3, basierend auf dem MPEG Standard, oder der digitale Kodierer in einem CD-Player oder ein AC-3-Algorithmus.

9. Breitband-CDMA-Mobilausrüstung, geeignet für das Übertragen von Mehrkanalton nach Anspruch 1, bei welcher gilt:
- der Breitband-CDMA-Modulator 105 ist ein Modulator mit einem BPSK- oder QPSK-Spread-Spectrum-Modus, der mit dem Spread-Spectrum-Modus des RF-Senders in Reihe bleibt.

10. Breitband-CDMA-Mobilausrüstung, geeignet für das Übertragen von Mehrkanalton nach Anspruch 1, bei welcher gilt:
- der Breitband-CDMA-Demodulator 202 ist ein Demodulator mit einem Korrelationsbetrieb als De-Spreading-Spectrum-Modus und einer Verbesserung des Signals durch einen RAKE-Empfängermodus.

11. Breitband-CDMA-Mobilausrüstung, geeignet für das Übertragen von Mehrkanalton nach Anspruch 1, bei welcher gilt:
- der Duplexer 400 ist eine Frequenzteilungs-Duplexeinheit (FDD).

12. Breitband-CDMA-Mobilausrüstung, geeignet für das Übertragen von Mehrkanalton nach Anspruch 1, bei welcher gilt:
- der Duplexer 400 ist eine Zeitduplexeinheit (TDD) und der Duplexer ist mit der CPU 300 verbunden, geeignet für das An-Aus-Steuern des Empfangens und Sendens.

13. Breitband-CDMA-Mobilausrüstung, geeignet für das Übertragen von Mehrkanalton nach Anspruch 1, bei welcher gilt:
- die CPU 300 beinhaltet einen zentralen Prozessor und anhängende Schaltkreise, die eine Mensch-Maschine-Schnittstelle enthalten, in welchem der anhängende Schaltkreis zumindest eine Großspeichereinheit enthält, die für das Speichern der empfangenen Mehrkanaltondaten geeignet ist.

14. Breitband-CDMA-Mobilausrüstung, geeignet für das Übertragen von Mehrkanalton nach Anspruch 1 oder 2, bei welcher gilt:
- sie ist derart angepasst, dass sie auf das System als Endgerät des Mobilkommunikationssytems zugreifen kann.

15. Breitband-CDMA-Mobilausrüstung, geeignet für das Übertragen von Mehrkanalton nach Anspruch 1 oder 2, bei welcher gilt:
- sie ist derart ausgelegt, dass sie ein mobiles Endgerät in Form eines tragbaren Geräts, eines Handsets oder eines Fahrzeuggeräts sein kann.

## Revendications

1. Equipement mobile AMRC large bande apte à émettre des signaux audio multivoies comprenant une unité émettrice (100), une unité réceptrice (200), une unité centrale (UC, 300), un duplexeur (400) et une antenne (401), l'unité centrale (300) et le duplexeur (400) sont connectés respectivement à l'unité émettrice (100) et à l'unité réceptrice (200), le duplexeur (400) est relié à l'antenne (401), dans lequel :
ladite unité émettrice (100) comprend au moins des ensembles de capteurs (101), des ensembles de prétraitement (102) de signaux audio, un codeur de signaux audio (103), un codeur de canaux (104), un modulateur AMRC large bande (105) et un émetteur haute fréquence (HF) (106), qui sont reliés en séquence, la sortie de l'émetteur HF (106), reliée à l'entrée du duplexeur (400), transmet à l'antenne (401) ;
ladite unité réceptrice (200) comporte au moins un récepteur HF (201), un démodulateur AMRC large bande (202), un décodeur de canaux (203), un décodeur de signaux audio (204), des ensembles de post-traitement (205) de signaux audio, et un dispositif de reproduction audio (206), qui sont reliés en séquence, le signal reçu par l'antenne (401) peut être envoyé au récepteur HF (201) via le duplexeur (400) ;
lesdits ensembles de capteurs (101) sont constitués de plus d'un capteur, lesdits ensembles de prétraitement (102) de signaux audio sont constitués de plus d'un préprocesseur de signaux audio, chaque préprocesseur de signaux audio correspondant à un capteur, lesdits ensembles de post-traitement (205) de signaux audio sont constitués de plus d'un post-processeur de signaux audio.

2. Equipement mobile AMRC large bande apte à émettre des signaux audio multivoies selon la revendication 1, dans lequel :
ladite unité émettrice (100) comprend en outre une tête de lecture (107), une unité de prétraitement (108) de signaux vidéo et un codeur de signaux vidéo (109), qui sont reliés en séquence, et la sortie du codeur de signaux vidéo (109) est reliée à l'entrée dudit codeur de canaux (104) ;
ladite unité réceptrice comprend en outre un décodeur de signaux vidéo (207), une unité de post-traitement (208) de signaux vidéo et un moniteur (209), qui sont reliés en séquence, et l'entrée du décodeur vidéo (207) est reliée à la sortie du décodeur de canaux (203).

3. Equipement mobile AMRC large bande apte à émettre des signaux audio multivoies selon la revendication 1, dans lequel il y a deux ou plus de deux desdits capteurs (101) qui peuvent être des capteurs standards ou haute fidélité.

4. Equipement mobile AMRC large bande apte à émettre des signaux audio multivoies selon la revendication 1 ou 3, dans lequel ledit capteur (101) est l'interface d'entrée de ligne de signaux audio multivoies.

5. Equipement mobile AMRC large bande apte à émettre des signaux audio multivoies selon la revendication 1, dans lequel ledit dispositif de reproduction audio (206) est un ensemble de haut-parleurs, chaque haut-parleur correspondant à un post-processeur (205) de signaux audio.

6. Equipement mobile AMRC large bande apte à émettre des signaux audio multivoies selon la revendication 1, dans lequel ledit dispositif de reproduction audio (206) est l'interface de sortie de ligne de signaux audio multivoies.

7. Equipement mobile AMRC large bande apte à émettre des signaux audio multivoies selon la revendication 1, dans lequel ledit dispositif de reproduction audio (206) est un écouteur multivoie relié à une prise jack de sortie écouteur multivoie.

8. Equipement mobile AMRC large bande apte à émettre des signaux audio multivoies selon la revendication 1, dans lequel ledit codeur de signaux audio (103) est un codeur MP3 basé sur la norme MPEG ou un codeur numérique d'un lecteur CD, ou un algorithme AC-3.

9. Equipement mobile AMRC large bande apte à émettre des signaux audio multivoies selon la revendication 1, dans lequel ledit modulateur AMRC large bande (105) est un modulateur à mode d'étalement de spectre BPSK ou QPSK qui reste en ligne avec le mode d'étalement de spectre de l'émetteur HF.

10. Equipement mobile AMRC large bande apte à émettre des signaux audio multivoies selon la revendication 1, dans lequel ledit démodulateur AMRC large bande (202) est un démodulateur avec une opération de corrélation en tant que mode de désétalement de spectre et un signal d'amélioration par mode récepteur RAKE.

11. Equipement mobile AMRC large bande apte à émettre des signaux audio multivoies selon la revendication 1, dans lequel ledit duplexeur (400) est un duplex à répartition de fréquence (FDD).

12. Equipement mobile AMRC large bande apte à émettre des signaux audio multivoies selon la revendication 1, dans lequel ledit duplexeur (400) est un duplex à répartition dans le temps (TDD), et ledit duplexeur est relié à l'unité centrale (300) adaptée pour commander le marche-arrêt de la réception et de l'émission.

13. Equipement mobile AMRC large bande apte à émettre des signaux audio multivoies selon la revendication 1, dans lequel ladite unité centrale (300) comprend un processeur central et des circuits annexes contenant une interface homme-machine, où les circuits annexes comprennent au moins une unité de mémoire à grande échelle capable de stocker les données audio multivoies reçues.

14. Equipement mobile AMRC large bande apte à émettre des signaux audio multivoies selon la revendication 1 ou 2, dans lequel il est adapté de telle manière qu'il peut accéder au système en tant qu'équipement terminal d'un système de télécommunication mobile.

15. Equipement mobile AMRC large bande apte à émettre des signaux audio multivoies selon la revendication 1 ou 2, dans lequel il est adapté de telle manière qu'il peut être un équipement terminal mobile sous la forme d'une machine portable, d'un combiné ou d'une machine de véhicule.
